# EUROPÄISCHE PATENTSCHRIFT

(11) **EP 3 912 938 B1**
(45) Veröffentlichungstag und Bekanntmachung des Hinweises auf die Patenterteilung: **30.07.2025**
(21) Anmeldenummer: 21174987.4
(22) Anmeldetag: 20.05.2021
(51) Int. Cl.: B65G 47/86

(54) **KLAMMERVORRICHTUNG UND BEHÄLTERBEHANDLUNGSVORRICHTUNG**
CLAMPING DEVICE AND CONTAINER HANDLING DEVICE
DISPOSITIF DE SERRAGE ET DISPOSITIF DE MANUTENTION DE RÉCIPIENTS

(30) Priorität: 20.05.2020 DE 102020113599
(43) Veröffentlichungstag der Anmeldung: 24.11.2021
(73) Patentinhaber: KRONES AG, 93073 Neutraubling (DE)
(72) Erfinder: Zeitler, Felix, 93073 Neutraubling (DE); Heinze, Bernhard, 93073 Neutraubling (DE)
(74) Vertreter: Nordmeyer, Philipp Werner

(56) Entgegenhaltungen:
- EP-A1- 0 448 003
- EP-A1- 0 462 336
- EP-B1- 2 406 158
- WO-A1-03/078285
- WO-A1-2019/137891
- CN-A- 110 406 886
- DE-A1- 102014 101 959
- DE-A1- 102017 105 024
- DE-A1- 3 602 839
- DE-U1- 20 305 988
- US-A1- 2009 315 281
- US-A1- 2010 282 364
- US-A1- 2018 127 220

## Beschreibung

### Technisches Gebiet

Die vorliegende Erfindung betrifft eine Klammervorrichtung zum Halten eines Behälters in einer Behälterbehandlungsvorrichtung, beispielsweise zum Halten eines Getränkebehälters in einer Behälterbehandlungsvorrichtung einer Getränkeabfüllanlage und eine Behälterbehandlungsvorrichtung.

### Stand der Technik

Es ist bekannt, in Getränkeabfüllanlagen die darin zu behandelnden Behälter mittels Klammervorrichtungen durch einzelne Behandlungsstationen einer Behälterbehandlungsvorrichtung zu transportieren. Derartige Klammervorrichtungen weisen zwei relativ zueinander bewegbare Klammerarme auf, welche zwischen einer geöffneten Position, in welcher ein zu haltender Behälter zwischen den Klammerarmen positioniert werden kann, und einer geschlossenen Position, in welcher der zwischen den Klammerarmen positionierte Behälter durch die Klammerarme gehalten werden kann, bewegbar sind.

Zum Halten des Behälters weist jeder Klammerarm einen Halteabschnitt auf, mit welchem der Klammerarm mit dem Behälter in Kontakt kommt, um letzteren zu halten. Durch den ständigen Kontakt mit den gehaltenen Behältern erfährt der Halteabschnitt eine sukzessive Abnutzung. Um dieser Abnutzung Rechnung zu tragen sowie um zu ermöglichen, dass verschiedene Behältertypen durch dieselbe Klammervorrichtung gehalten und transportiert werden können, ist es bekannt, an den Klammerarmen austauschbare Klammerbacken vorzusehen, welche jeweils mit einem dem jeweiligen Klammerarm zugehörigen Halteabschnitt ausgestattet sind, wie beispielsweise der DE 10 2007 048 861 A1 zu entnehmen.

So ist bei einem Wechsel der Behandlung von einem Behältertyp zu einem anderen Behältertyp bei der Klammervorrichtung lediglich ein Austauschen der Klammerbacken vorzunehmen. Die restlichen Teile der Klammervorrichtung, insbesondere die Klammerarme, können dauerhaft an der Behandlungsvorrichtung, beispielsweise an dessen Klammerträger, verbleiben.

Zum Befestigen der Klammerbacke an einem Klammerarm ist es bekannt, dass der Klammerarm eine Verriegelungseinheit zum Verriegeln der Klammerbacke am Klammerarm aufweist, wie etwa der DD 226 826 A1 zu entnehmen. Aus dieser bekannten Ausgestaltung resultiert ein hoher Fertigungsaufwand der Klammerarme, da die Verriegelungseinheit an die Klammerarme montiert und befestigt, beispielsweise verschraubt oder verschweißt, werden muss. Durch das Vorsehen der Verriegelungseinheit an dem Klammerarm erhöht sich zum einen dessen Komplexität. Zum anderen ist ein mit der Verriegelungseinheit versehener Klammerarm aufgrund der Verriegelungseinheit aufwendig zu reinigen und zudem bei einem Defekt schlecht auswechselbar, insbesondere wenn vorgesehen ist, dass der Klammerarm fest an dem Klammerträger der Behandlungsvorrichtung verbleibt, wie dies beispielsweise bei Vorrichtungen zum Spülen von Behältern, sogenannten "Rinsern", der Fall ist.

Die WO 2019/137891 A1 beschreibt ein Transportkarussell für Behälter, das Greifarme mit austauschbaren Adapterelementen aufweist. Die DE 10 2014 101 959 A1 beschreibt eine Klammervorrichtung gemäß dem Oberbegriff des Anspruchs 1, einen

Transportstern zur Beförderung von Behältern, der eine Transporttasche zur Aufnahme eines Behälters und eine an der Transporttasche angeordnete Behälterschutzabdeckung aufweist. Die US 2010/0282364 A1 beschreibt eine Behälterbehandlungsmaschine mit Klammerarmen, die jeweils einen Haltekörper aufweisen.

### Darstellung der Erfindung

Ausgehend von dem bekannten Stand der Technik ist es eine Aufgabe der vorliegenden Erfindung, eine verbesserte Klammervorrichtung zum Halten eines Behälters in einer Behälterbehandlungsvorrichtung, insbesondere zum Halten eines Getränkebehälters in einer Behälterbehandlungsvorrichtung einer Getränkeabfüllanlage, bereitzustellen.

Die Aufgabe wird durch eine Klammervorrichtung zum Halten eines Behälters in einer Behälterbehandlungsvorrichtung, bevorzugt zum Halten eines Getränkebehälters in einer Behälterbehandlungsvorrichtung einer Getränkeabfüllanlage, mit den Merkmalen des Anspruchs 1 gelöst. Vorteilhafte Weiterbildungen ergeben sich aus den Unteransprüchen, der Beschreibung und den Figuren.

Entsprechend wird eine Klammervorrichtung zum Halten eines Behälters in einer Behälterbehandlungsvorrichtung, bevorzugt zum Halten eines Getränkebehälters in einer Behälterbehandlungsvorrichtung einer Getränkeabfüllanlage, vorgeschlagen, umfassend zwei relativ zueinander bewegbare Klammerarme, wobei zumindest ein Klammerarm eine austauschbare Klammerbacke mit einem Halteabschnitt zum Halten des zu haltenden Behälters aufweist. Die Klammervorrichtung kennzeichnet sich dadurch, dass die Klammerbacke ein Rastelement zum Eingehen eines Formschlusses mit einer im zugehörigen Klammerarm ausgebildeten Aussparung aufweist.

Dadurch, dass die Klammerbacke ein Rastelement zum Eingehen eines Formschlusses mit einer im zugehörigen Klammerarm ausgebildeten Aussparung aufweist, ist es nicht mehr erforderlich, den Klammerarm mit einer eigenen Verriegelungseinheit zum Fixieren der auswechselbaren Klammerbacke am Klammerarm zu versehen. Entsprechend kann der Klammerarm einen einfacheren Aufbau aufweisen. Ebenso kann dadurch eine einfachere Fertigung des Klammerarmes und ebenso der Klammervorrichtung erzielt werden, weil beispielsweise ein Schweißen und anschließendes Beizen und/oder Elektropolieren entfallen kann.

Ferner kann ein Austausch der Klammerbacke im Vergleich zu herkömmlichen Klammervorrichtungen erleichtert sein. Zum Austauschen einer Klammerbacke hat der Servicetechniker die Klammerbacke zu greifen. Hierfür ist er in unmittelbarer Nähe zur Klammerbacke. Da die Klammerbacke das Rastelement aufweist, hat der Servicetechniker nicht an eine andere Stelle der Klammervorrichtung zu greifen, um die Verriegelung zum Klammerarm zu lösen, sondern muss lediglich an das Rastelement, mithin an die Klammerbacke greifen, was ohnehin erforderlich ist. Damit kann ein Austausch beziehungsweise ein Demontieren sowie ein Montieren einer Klammerbacke beispielsweise auch mit nur einer Hand erfolgen, so dass ein deutlich vereinfachter und gleichzeitig auch sichererer Umgang mit der Klammerbacke erreicht werden kann.

Das Rastelement umfasst einen elastisch verformbaren Bereich, bevorzugt einen Auslegerarm. Das Rastelement ist als Schnapphaken ausgebildet.

Ferner umfasst das Rastelement ein Interaktionssegment zum Lösen des Formschlusses, wobei durch Betätigen des Interaktionselements auf einfache Weise ein Lösen der Verriegelung der Klammerbacke am Klammerarm erzielt und so die Klemmbacke von dem Klammerarm demontiert werden kann.

Um ein Aufschieben der Klammerbacke auf den Klammerarm zu erleichtern, umfasst das Rastelement einen zu einer Aufschieberichtung, in welcher die Klammerbacke auf den zugehörigen Klammerarm geschoben werden kann, geneigten Fasenabschnitt.

Gemäß einer weiteren bevorzugten Ausführungsform umfasst die Klammerbacke eine sich in Aufschieberichtung, in welcher die Klammerbacke auf den zugehörigen Klammerarm geschoben werden kann, erstreckende Aufnahme zum Aufnehmen eines Aufsteckbereichs des zugehörigen Klammerarms. Durch die Aufnahme kann eine Positionierung der Klammerbacke relativ zum Klammerarm senkrecht zur Aufschieberichtung erzielt werden.

Vorzugsweise weist die Klammerbacke zumindest einen sich senkrecht zur Aufschieberichtung von einer Innenwand der Aufnahme erstreckenden Klemmfortsatz auf. Der Klemmfortsatz ist dabei bevorzugt derart ausgebildet, dass ein zwischen dem Klemmfortsatz und einer gegenüberliegenden Innenwand der Aufnahme vorliegender Abstand um einen vorgegebenen Wert, beispielsweise um einen Skalierungsfaktor von 0,9 bis 0,99, geringer ist, als eine Breite des Klammerarmes beziehungsweise des Aufsteckbereichs in Richtung des vorgenannten Abstands. Dadurch kann eine vorbestimmte Klemmkraft von der Klammerbacke auf den Aufsteckbereich des Klammerarmes so aufgebracht werden, dass die Klammerbacke lagestabil am Klammerarm positioniert ist. Es hat sich als besonders vorteilhaft herausgestellt, wenn in der Aufnahme zumindest zwei Klemmfortsätze vorgesehen sind. Bevorzugt liegen sich zwei Klemmfortsätze gegenüber und/oder es sind zumindest zwei Klemmfortsätze in 90° zueinander orientiert.

Gemäß der Erfindung ist die Klammerbacke einstückig ausgebildet, bevorzugt als 3D-Druck-Teil. Insbesondere ist hierbei das Rastelement einstückig mit der restlichen Klammerbacke ausgeformt.

Gemäß einer weiteren bevorzugten Ausführungsform ist zumindest ein Klammerarm, bevorzugt zumindest der mit der Klammerbacke versehene Klammerarm, als Spritzgussteil ausgebildet.

Alternativ oder zusätzlich ist zumindest ein Klammerarm, bevorzugt zumindest der mit der Klammerbacke versehene Klammerarm, aus einem ausgeschnittenen Umformblech ausgebildet, wobei das Umformblech bevorzugt aus einem aus ebenen Blech ausgeschnittenen Rohling heraus umgeformt ist, wobei der Rohling bevorzugt mittels Biegen, Tiefziehen, Kaltumformen, und/oder Warmumformen umgeformt ist.

Vorzugsweise ist der Rohling mittels Wasserstrahlschneiden, Stanzen, Laserschneiden oder Sägen aus dem ebenen Blech geschnitten.

Gemäß einer weiteren bevorzugten Ausführungsform umfasst zumindest ein Klammerarm, bevorzugt der mit der Klammerbacke versehene Klammerarm, einen thermoplastischen Kunststoff oder ein Metall beziehungsweise eine Metalllegierung. Die vorgenannten Materialien eignen sich im Besonderen für die zuvor beschriebenen Fertigungsverfahren.

Es hat sich als vorteilhaft herausgestellt, wenn die Klammerbacke einen Kunststoff umfasst, wobei sie bevorzugt aus diesem besteht.

Alternativ kann die Klammerbacke auch ein Metall beziehungsweise eine Metalllegierung umfassen, wobei sie bevorzugt aus dem Metall beziehungsweise der Metalllegierung besteht. Gemäß einer weiteren bevorzugten Ausführungsform weisen beide Klammerarme jeweils eine Klammerbacke mit einem Rastelement zum Eingehen eines Formschlusses mit einer im zugehörigen Klammerarm ausgebildeten Aussparung auf.

Die oben gestellte Aufgabe wird weiterhin durch eine Behälterbehandlungsvorrichtung mit den Merkmalen des Anspruchs 8 gelöst. Vorteilhafte Weiterbildungen ergeben sich aus den Unteransprüchen sowie der vorliegenden Beschreibung und den beigefügten Figuren. Entsprechend wird eine Behälterbehandlungsvorrichtung vorgeschlagen, umfassend eine Behandlungseinheit zum Behandeln eines Behälters und einen Klammerträger. An dem Klammerträger ist zumindest eine Klammervorrichtung gemäß einem der vorstehenden Ausführungsformen an dem Klammerträger angebracht.

Dadurch, dass zumindest eine Klammervorrichtung gemäß einer der vorstehenden Ausführungsformen an dem Klammerträger angebracht ist, können die hinsichtlich der Klammervorrichtung beschriebenen Vorteile und Wirkungen in analoger Weise durch die Behälterbehandlungsvorrichtung erzielt werden. Vorzugsweise umfasst die Behandlungseinheit eine Spüleinheit zum Spülen eines Behälters. Mit anderen Worten stellt die Behälterbehandlungsvorrichtung bevorzugt einen Rinser dar.

Die oben gestellte Aufgabe wird ferner durch eine austauschbare Klammerbacke gelöst.

Durch die Klammerbacke können die hinsichtlich der Klammervorrichtung beschriebenen Vorteile und Wirkungen in analoger Weise erzielt werden.

Die hinsichtlich der Klammervorrichtung beschriebenen Varianten der Klammerbacke treffen auch auf die Klammerbacke an sich zu.

Entsprechend wird eine austauschbare Klammerbacke für einen Klammerarm einer Klammervorrichtung zum Halten eines Behälters in einer Behälterbehandlungsvorrichtung, bevorzugt einer Klammervorrichtung zum Halten eines Getränkebehälters in einer Getränkeabfüllanlage, vorgeschlagen, umfassend einen Halteabschnitt zum Halten des zu haltenden Behälters. Die Klammerbacke weist ferner ein Rastelement zum Eingehen eines Formschlusses mit einer im Klammerarm ausgebildeten Aussparung auf. Das Rastelement ist im Sinne eines Schnapphakens ausgebildet und umfasst einen gegen eine Aufschieberichtung, in welcher die Klammerbacke auf den zugehörigen Klammerarm geschoben werden kann, geneigten Fasenabschnitt. Ferner ist die Klammerbacke einstückig ausgebildet.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Seitenansicht einer Klammervorrichtung zum Halten eines Behälters;
- Figur 2: schematisch eine weitere perspektivische Seitenansicht der Klammervorrichtung aus Figur 1;
- Figur 3: schematisch eine Schnittansicht durch einen Klammerarm der Klammervorrichtung der Figuren 1 und 2;
- Figur 4: schematisch eine perspektivische Seitenansicht einer Klammerbacke der Klammervorrichtung der Figuren 1 bis 3;
- Figur 5: schematisch eine perspektivische Seitenansicht einer weiteren Klammerbacke der Klammervorrichtung der Figuren 1 bis 3;
- Figur 6: schematisch eine Seitenansicht der Klammerbacke aus Figur 5;
- Figur 7: schematisch eine Draufsicht eines Rohlings zur Herstellung eines Klammerarmes der Klammervorrichtung gemäß den Figuren 1 bis 3;
- Figur 8: schematisch eine perspektivische Seitenansicht des aus den Rohling gemäß Figur 7 gefertigten Klammerarmes; und
- Figur 9: schematisch eine Draufsicht einer Behälterbehandlungsvorrichtung.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

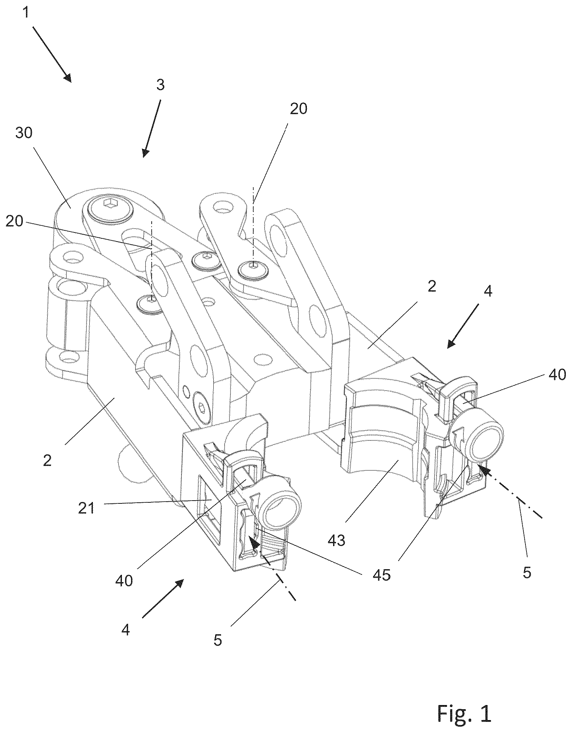

In Figur 1 ist schematisch eine perspektivische Seitenansicht einer Klammervorrichtung 1 zum Halten eines Behälters gezeigt. Die Klammervorrichtung 1 umfasst zwei relativ zueinander bewegbare Klammerarme 2, welche jeweils an einem zentral angeordneten Klammerarmträger 3 über eine jeweilige Schwenkachse 20 schwenkbar angeordnet sind. Durch Betätigung eines Betätigungselements 30 des Klammerarmträgers 3 können die Klammerarme 2 zwischen einer geöffneten und einer geschlossenen Position geschwenkt werden.

Jeder der beiden Klammerarme 2 weist eine austauschbare Klammerbacke 4 auf, welche jeweils einen Halteabschnitt 43 zum Halten des zu haltenden Behälters aufweist. Die Klammerbacken 4 sind auf die Klammerarme 2 aufgeschoben, indem die Klammerbacke 4 in einer Aufschieberichtung 5 auf einen Aufsteckbereich 21 des zugehörigen Klammerarmes 2 aufgesteckt werden, beziehungsweise der Aufsteckbereich 21 in Aufschieberichtung 5 in eine an der Klammerbacke 4 vorgesehenen Aufnahme 45 eingeschoben wird.

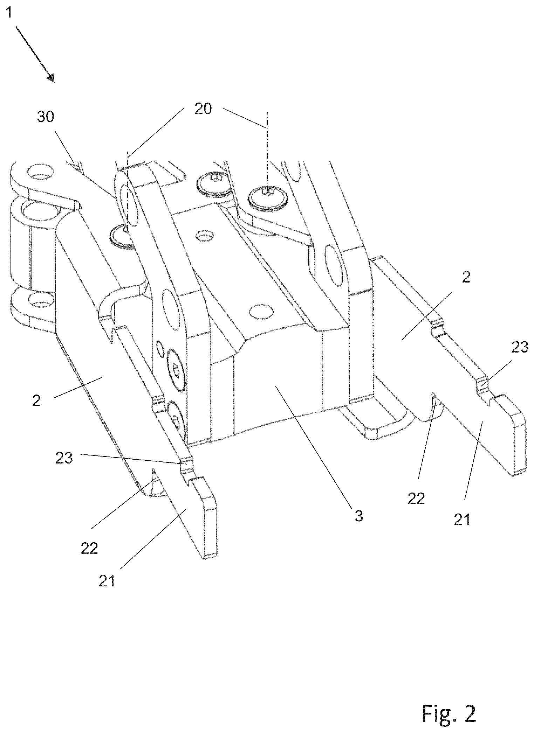

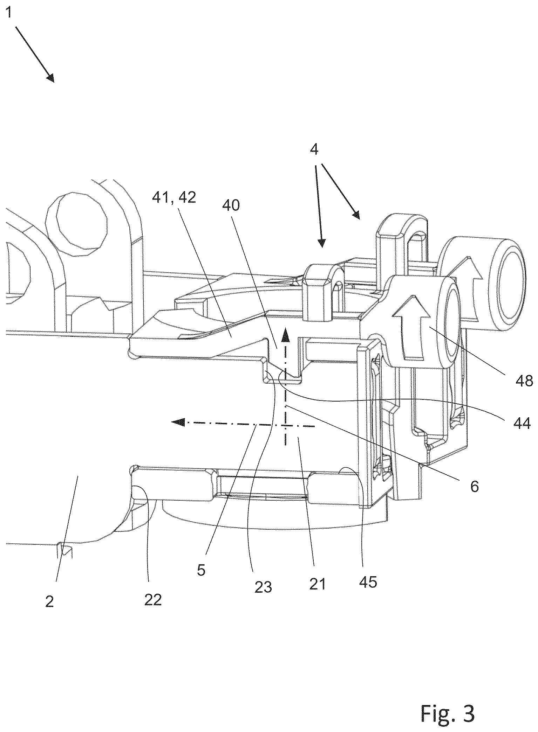

Die Klammerbacken 4 weisen jeweils ein Rastelement 40 zum Eingehen eines Formschlusses in Aufschieberichtung 5 mit einer im zugehörigen Klammerarm 2 ausgebildeten Aussparung (siehe Figuren 2 und 3) auf.

Figur 2 zeigt schematisch eine weitere perspektivische Seitenansicht der Klammervorrichtung 1 aus Figur 1, wobei die Klammerbacken 4 von den Klammerarmen 2 abgenommen sind. Dadurch ist bei den Klammerarmen 2 jeweils die sich im Aufsteckbereich 21 angeordnete Aussparung 23 zu erkennen. Ferner zu erkennen ein Anschlag 22, welcher das Aufschieben der Klammerbacke 4 auf den Klammerarm 2 in Aufschieberichtung 5 begrenzt.

Aus Figur 3 ist schematisch eine Schnittansicht durch einen Klammerarm 2 der Klammervorrichtung 1 der Figuren 1 und 2 zu entnehmen. Das Rastelement 40 umfasst einen sich vom Grundkörper der Klammerbacke 4 erstreckenden Auslegerarm 42, welcher einen elastisch verformbaren Bereich 41 darstellt. Das Rastelement 40 umfasst ferner ein Interaktionssegment 48, durch dessen Betätigung der Auslegerarm 42 in eine senkrecht zur Aufschieberichtung 5 angeordnete Öffnungsrichtung 6 angehoben werden kann, sodass das Rastelement 40 mit der Aussparung 23 außer Eingriff gerät und so die Klammerbacke 4 vom Klammerarm 2 abgenommen werden kann.

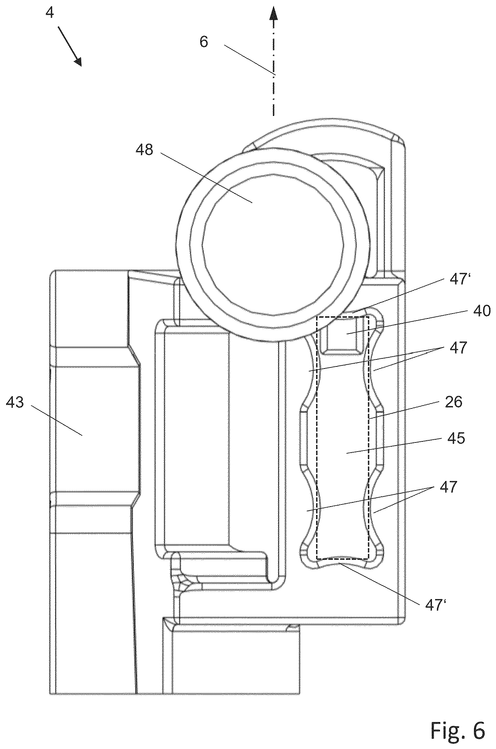

Wie in Bezug auf Figur 6 näher erläutert, ist die Aufnahme 45 der Klammerbacke 4 derart ausgebildet, dass die Klammerbacke 4 am Aufsteckbereich 21 verdrehsicher und im Wesentlichen spielfrei in Richtung der Aufschieberichtung 5 geführt ist. Wie bereits zuvor erwähnt, begrenzt der Anschlag 22 das Aufschieben der Klammerbacke 4.

Um das Aufschieben der Klammerbacke 4 auf den Aufsteckbereich 21 zu erleichtern, weist das Rastelement 40 einen gegen die Aufschieberichtung 5 geneigten Fasenabschnitt 44 auf

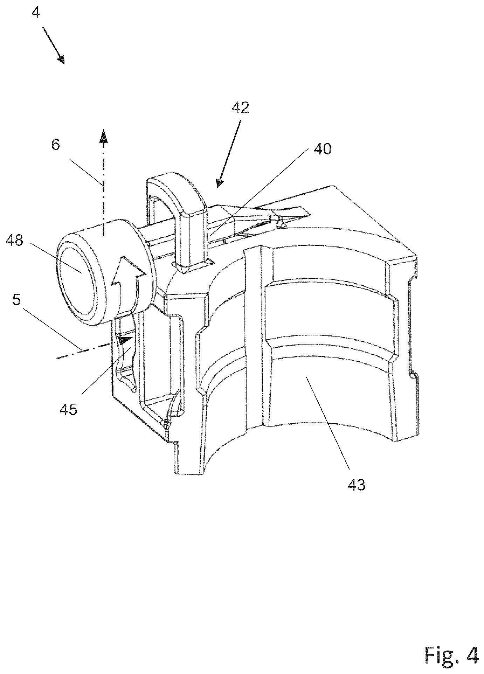

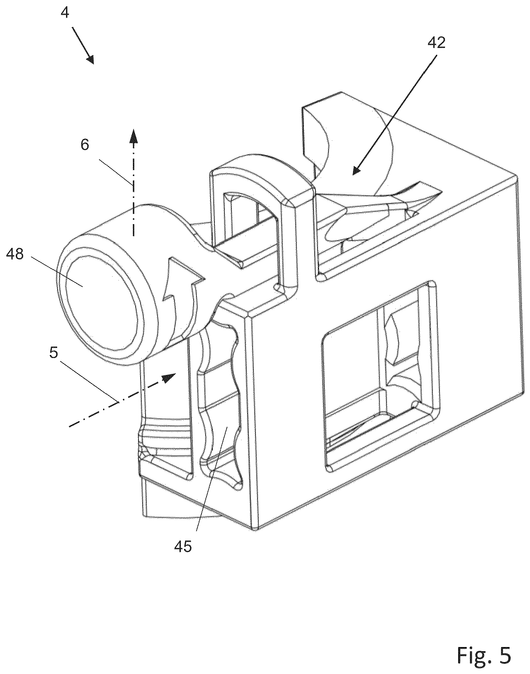

In den Figuren 4 und 5 sind perspektivische Seitenansichten der Klammerbacken 4 der beiden Klammerarme 2 der Klammervorrichtung 1 aus den Figuren 1 bis 3 dargestellt. Die Klammerbacken 4 sind in Bezug auf eine Mittelachse der Klammervorrichtung spiegelsymmetrisch ausgebildet und stellen eine rechte und eine linke Klammerbacke 4 dar.

Figur 6 zeigt schematisch eine Seitenansicht der Klammerbacke 4 aus Figur 5, welche einer Ansicht in Aufschieberichtung 5 entspricht. Aus dieser Ansicht ist deutlich zu erkennen, dass die Aufnahme 45 sich von den Innenwänden der Aufnahme 45 senkrecht zur Aufschieberichtung 5 erstreckende Klemmfortsätze 47, 47' umfasst. Hierbei liegen sich jeweils ein Paar von Klemmfortsätzen 47, 47' gegenüber. Die Klemmfortsätze 47 begrenzen die Breite der Aufnahme, wohingegen die Klemmfortsätze 47' die Höhe der Aufnahme begrenzen.

Mittels des Bezugszeichens 26 ist eine Querschnittkontur des Aufsteckbereichs 21 angedeutet. Die Querschnittkontur 26 weist eine Breite und eine Höhe auf, welche jeweils geringfügig größer ist als die durch die Klemmfortsätze 47, 47' vorgegebene Breite und Höhe der Aufnahme 45. Vorliegend sind Breite und Höhe der Aufnahme 45 um einen Skalierungsfaktor von 0,98 geringer als die Breite und die Höhe des Aufsteckbereichs 21. Dadurch kann eine vorbestimmte Klemmkraft, welche sich aus der Steifigkeit des Materials der Klammerbacke 4 sowie des Aufsteckbereichs 21, und der durch die vorbeschriebene Skalierung vorliegenden Differenz in Höhe und Breite ergibt, von der Klammerbacke 4 auf den Aufsteckbereich 21 des Klammerarmes 2 aufgebracht werden, sodass die Klammerbacke 4 lagestabil am Klammerarm 2 positioniert ist.

Hier sind die Klammerbacken 4 aus einem thermoplastischen Kunststoff als 3D-Druck-Teil ausgebildet.

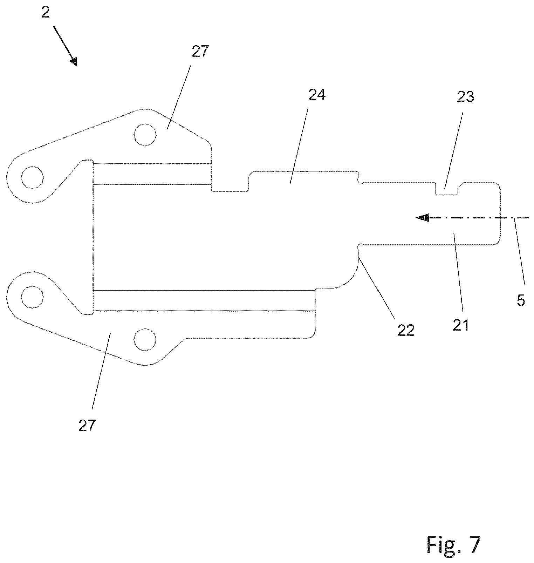

Figur 7 zeigt schematisch eine Draufsicht eines Rohlings 24 zur Herstellung eines Klammerarmes 2 der Klammervorrichtung 1 gemäß den Figuren 1 bis 3. der Rohling 24 ist aus einem ebenen Blech aus einer Stahllegierung mittels Laserschneiden herausgelöst beziehungsweise herausgeschnitten.

Hierbei ist der gesamte Aufsteckbereich 21 mitsamt Aussparung 23 und Anschlag 22 bereits innerhalb eines vorgegebenen Toleranzbereichs auf seine Endmaße, wie sie der Klammerarm 2 im in der Klammervorrichtung 1 verbauten Zustand aufweist, geschnitten, sodass der Aufsteckbereich 21, neben einem optionalen Schritt zum Entgraten der Schnittkante, beispielsweise einem Sandstrahlprozess, keiner weitere Behandlung bedarf.

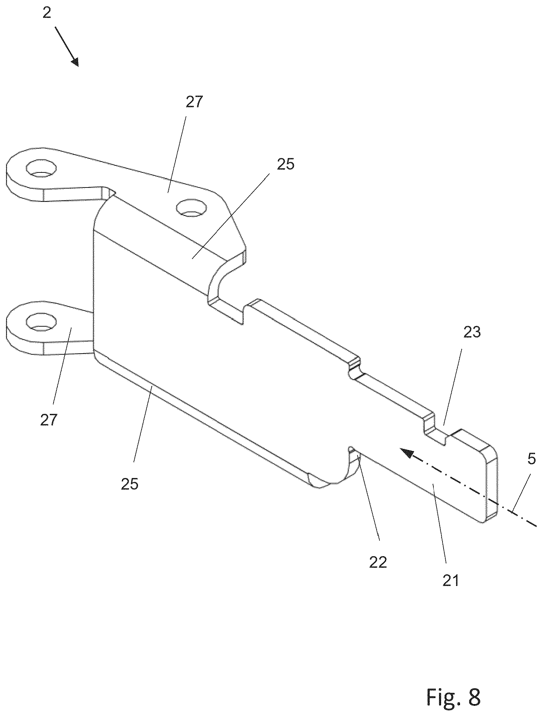

Die endgültige Form des Klammerarmes 2 wie in Figur 8 dargestellt, erhält dieser durch ein Umformen des Rohlings 24, welches vorliegend durch ein Biegen zweier Biegebereiche 27, jeweils um eine Biegekante 25, erfolgte.

Insbesondere, wenn ein Klammerarm 2 aus einem thermoplastischen Kunststoff ausgebildet ist, kann das Umformen auch im Sinne eines Tiefziehens erfolgen, wobei der Rohling 24 zumindest im Bereich der Biegekanten 26 angewärmt wird, sodass eine Warmverformung möglich ist, bevor die Biegebereiche 27 umgeformt werden.

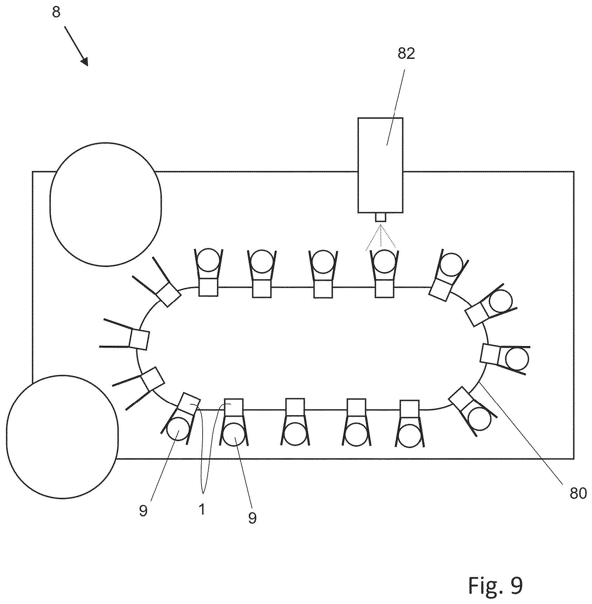

Figur 9 zeigt schematisch eine Draufsicht einer Behälterbehandlungsvorrichtung 8, umfassend eine Behandlungseinheit 82 zum Behandeln von durch die Behälterbehandlungsvorrichtung 8 transportierten Behältern 9. Zum Transportieren der Behälter 9 durch die Behälterbehandlungsvorrichtung 8 weist diese einen in einer Transportrichtung 84 bewegbaren Klammerträger 80 auf, an welchem eine Vielzahl von Klammervorrichtungen 1 gemäß der in den Figuren 1 bis 8 beschriebenen Ausführungsform angebracht sind.

Die Behandlungseinheit 82 ist vorliegend als Spüleinheit zum Spülen der Behälter 9 ausgebildet. Folglich stellt die Behälterbehandlungsvorrichtung 8 einen Rinser dar.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Klammervorrichtung
- 2: Klammerarm
- 20: Schwenkachse
- 21: Aufsteckbereich
- 22: Anschlag
- 23: Aussparung
- 24: Rohling
- 25: Biegekante
- 26: Querschnittkontur
- 27: Biegebereich
- 3: Klammerarmträger
- 30: Betätigungselement
- 4: Klammerbacke
- 40: Rastelement
- 41: Elastisch verformbarer Bereich
- 42: Auslegerarm
- 43: Halteabschnitt
- 44: Fasenabschnitt
- 45: Aufnahme
- 46: Innenwand
- 47, 47': Klemmfortsatz
- 48: Interaktionselement
- 5: Aufschieberichtung
- 6: Öffnungsrichtung
- 8: Behälterbehandlungsvorrichtung
- 80: Klammerträger
- 82: Behandlungseinheit
- 84: Transportrichtung
- 9: Behälter

## Patentansprüche

1. Klammervorrichtung (1) zum Halten eines Behälters (9) in einer Behälterbehandlungsvorrichtung (8), bevorzugt zum Halten eines Getränkebehälters in einer Behälterbehandlungsvorrichtung einer Getränkeabfüllanlage, umfassend zwei relativ zueinander bewegbare Klammerarme (2), wobei zumindest ein Klammerarm (2) eine austauschbare Klammerbacke (4) mit einem Halteabschnitt (43) zum Halten des zu haltenden Behälters (9) aufweist, wobei
die Klammerbacke (4) einstückig ausgebildet ist und ein Rastelement (40) zum Eingehen eines Formschlusses mit einer im zugehörigen Klammerarm (2) ausgebildeten Aussparung (23) aufweist, wobei
das Rastelement (40) einen elastisch verformbaren Bereich (41) umfasst und als Schnapphaken ausgebildet ist
**dadurch gekennzeichnet, dass** das Rastelement (40) einen gegen eine Aufschieberichtung (5), in welcher
die Klammerbacke (4) auf den zugehörigen Klammerarm (2) geschoben werden kann, geneigten Fasenabschnitt (44) umfasst, und
das Rastelement ein Interaktionssegment (48) zum Lösen des Formschlusses umfasst, wobei durch Betätigen des Interaktionssegments (48) auf einfache Weise ein Lösen der Verriegelung der Klammerbacke am Klammerarm erzielt und so die Klemmbacke von dem Klammerarm demontiert werden kann.

2. Klammervorrichtung gemäß Anspruch 1, **dadurch gekennzeichnet, dass** die Klammerbacke (4) eine sich in Aufschieberichtung (5), in welcher die Klammerbacke (4) auf den zugehörigen Klammerarm geschoben werden kann, erstreckende Aufnahme (45) zum Aufnehmen eines Aufsteckbereichs (21) des zugehörigen Klammerarms (2) umfasst, wobei bevorzugt die Klammerbacke (4) zumindest einen sich senkrecht zur Aufschieberichtung (5) von einer Innenwand der Aufnahme (45) erstreckenden Klemmfortsatz (47, 47') aufweist.

3. Klammervorrichtung gemäß einem der vorstehenden Ansprüche, **dadurch gekennzeichnet, dass** die Klammerbacke (4) als 3D-Druck-Teil ausgebildet ist.

4. Klammervorrichtung gemäß einem der vorstehenden Ansprüche, **dadurch gekennzeichnet, dass** zumindest ein Klammerarm (2), bevorzugt zumindest der mit der Klammerbacke (4) versehene Klammerarm (2), als Spritzgussteil ausgebildet ist, und/oder zumindest ein Klammerarm (2), bevorzugt zumindest der mit der Klammerbacke (4) versehene Klammerarm (2), aus einem ausgeschnittenen Umformblech ausgebildet ist, wobei das Umformblech bevorzugt aus einem aus einem ebenen Blech ausgeschnittenen Rohling (24) heraus umgeformt ist, wobei der Rohling (24) bevorzugt mittels Biegen, Tiefziehen, Kaltumformen, und/oder Warmumformen umgeformt ist.

5. Klammervorrichtung (1) gemäß dem vorstehenden Anspruch, **dadurch gekennzeichnet, dass** der Rohling (24) mittels Wasserstrahlschneiden, Stanzen, Laserschneiden oder Sägen aus dem ebenen Blech geschnitten ist.

6. Klammervorrichtung (1) gemäß einem der vorstehenden Ansprüche, **dadurch gekennzeichnet, dass** zumindest ein Klammerarm (2), bevorzugt der mit der Klammerbacke (4) versehene Klammerarm (2), einen thermoplastischen Kunststoff oder ein Metall beziehungsweise eine Metalllegierung umfasst, und/oder die Klammerbacke (4) einen Kunststoff umfasst.

7. Klammervorrichtung gemäß einem der vorstehenden Ansprüche, **dadurch gekennzeichnet, dass** beide Klammerarme (2) jeweils eine Klammerbacke (4) mit einem Rastelement (40) zum Eingehen eines Formschlusses mit einer im zugehörigen Klammerarm (2) ausgebildeten Aussparung (21) aufweisen.

8. Behälterbehandlungsvorrichtung (8), umfassend eine Behandlungseinheit (82) zum Behandeln eines Behälters (9) und einen Klammerträger (80),
**dadurch gekennzeichnet, dass**
zumindest eine Klammervorrichtung (1) gemäß einem der vorstehenden Ansprüche an dem Klammerträger (80) angebracht ist.

9. Behälterbehandlungsvorrichtung (8) gemäß dem vorstehenden Anspruch, **dadurch gekennzeichnet, dass** die Behandlungseinheit (82) eine Spüleinheit zum Spülen eines Behälters (9) umfasst.

## Claims

1. Clamp device (1) for retaining a container (9) in a container-handling apparatus (8), preferably for retaining a drinks container in a container-handling apparatus of a bottling plant, comprising two clamp arms (2) which can be moved relative to one another, wherein at least one clamp arm (2) has an interchangeable clamp jaw (4) with a retaining portion (43) for retaining the container (9) which is to be retained, wherein
the clamp jaw (4) is formed in one piece and has a latching element (40) for undergoing a form fit with a recess (23) formed in the associated clamp arm (2), wherein
the latching element (40) comprises an elastically deformable region (41) and is formed in the manner of a snap-in hook,
**characterized in that**
the latching element (40) comprises a chamfer portion (44) which is inclined counter to a push-on direction (5), in which the clamp jaw (4) can be pushed onto the associated clamp arm (2), and
the latching element (40) comprises an interaction segment (48) for the purpose of releasing the form fit, wherein actuation of the interaction element (48) makes it possible for the locking of the clamp jaw (4) on the clamp arm (2) to be released such that the clamp jaw (4) can be removed from the clamp arm (2).

2. Clamp device according to claim 1, **characterized in that** the clamp jaw (4) comprises a mount (45) which extends in the push-on direction (5), in which the clamp jaw (4) can be pushed onto the associated clamp arm (2), and is intended for receiving a plug-on region (21) of the associated clamp arm (2), wherein preferably the clamp jaw (4) has at least one clamping extension (47, 47'), which extends from an inner wall of the mount (45) in a direction perpendicular to the push-on direction (5).

3. Clamp device according to one of the preceding claims, **characterized in that** the clamp jaw (4) is formed as a 3D printed part.

4. Clamp device according to one of the preceding claims, **characterized in that** at least one clamp arm (2), preferably at least the clamp arm (2) provided with the clamp jaw (4), is designed in the form of an injection moulding, and/or at least one clamp arm (2), preferably at least the clamp arm (2) provided with the clamp jaw (4), is formed from a cut-out shaped metal sheet, wherein the shaped metal sheet is preferably formed from a blank (24) cut out of a planar metal sheet, wherein the blank (24) is preferably formed by means of bending, thermoforming, cold working and/or hot working.

5. Clamp device (1) according to the preceding claim, **characterized in that** the blank (24) is cut out of the planar metal sheet by means of water-jet cutting, punching, laser cutting or sawing.

6. Clamp device (1) according to one of the preceding claims, **characterized in that** at least one clamp arm (2), preferably the clamp arm (2) provided with the clamp jaw (4), comprises a thermoplastic material or a metal or a metal alloy, and/or the clamp jaw (4) comprises a plastic material.

7. Clamp device according to one of the preceding claims, **characterized in that** the two clamp arms (2) each have a clamp jaw (4) with a latching element (40) for undergoing a form fit with a recess (23) formed in the associated clamp arm (2).

8. Container-handling apparatus (8), comprising a handling unit (82) for handling a container (9) and also comprising a clamp carrier (80),
**characterized in that**
at least one clamp device (1) according to one of the preceding claims is fitted on the clamp carrier (80).

9. Container-handling apparatus (8) according to the preceding claim, **characterized in that** the handling unit (82) comprises a rinsing unit for rinsing a container (9).

## Revendications

1. Dispositif de serrage (1) permettant de maintenir un récipient (9) dans un dispositif de traitement de récipient (8), de préférence permettant de maintenir un récipient de boisson dans un dispositif de traitement de récipient d'une installation d'embouteillage de boissons, comprenant deux bras de serrage (2) mobiles l'un par rapport à l'autre, dans lequel au moins un bras de serrage (2) présente une mâchoire de serrage (4) remplaçable comportant une section de maintien (43) permettant de maintenir le récipient (9) à maintenir, dans lequel
la mâchoire de serrage (4) est réalisée d'une seule pièce et présente un élément d'encliquetage (40) permettant d'établir une liaison par complémentarité de forme avec un évidement (23) réalisé dans le bras de serrage (2) associé, dans lequel
l'élément d'encliquetage (40) comprend une zone (41) élastiquement déformable et est réalisé comme un crochet à déclic
**caractérisé en ce que** l'élément d'encliquetage (40) comprend une section chanfreinée (44) inclinée contre une direction d'enfilage (5) dans laquelle la mâchoire de serrage (4) peut être enfilée sur le bras de serrage (2) associé, et
l'élément d'encliquetage comprend un segment d'interaction (48) permettant de libérer la liaison par complémentarité de forme, dans lequel l'actionnement du segment d'interaction (48) permet d'obtenir de manière simple une libération du verrouillage de la mâchoire de serrage sur le bras de serrage et de démonter ainsi la mâchoire de serrage du bras de serrage.

2. Dispositif de serrage selon la revendication 1, **caractérisé en ce que** la mâchoire de serrage (4) comprend un logement (45) s'étendant dans la direction d'enfilage (5) dans laquelle la mâchoire de serrage (4) peut être enfilée sur le bras de serrage associé, pour la réception d'une zone d'enfilage (21) du bras de serrage (2) associé, dans lequel de préférence la mâchoire de serrage (4) présente au moins un prolongement de serrage (47, 47') s'étendant perpendiculairement à la direction d'enfilage (5) à partir d'une paroi intérieure du logement (45).

3. Dispositif de serrage selon l'une des revendications précédentes,
**caractérisé en ce que** la mâchoire de serrage (4) est réalisée sous la forme d'une pièce imprimée en 3D.

4. Dispositif de serrage selon l'une des revendications précédentes,
**caractérisé en ce qu'**au moins un bras de serrage (2), de préférence au moins le bras de serrage (2) pourvu de la mâchoire de serrage (4), est réalisé sous forme de pièce moulée par injection, et/ou au moins un bras de serrage (2), de préférence au moins le bras de serrage (2) pourvu de la mâchoire de serrage (4), est réalisé à partir d'une tôle de formage découpée, dans lequel la tôle de formage est de préférence formée à partir d'une ébauche (24) découpée dans une tôle plane, dans lequel l'ébauche (24) est de préférence formée par pliage, emboutissage, formage à froid et/ou formage à chaud.

5. Dispositif de serrage (1) selon la revendication précédente, **caractérisé en ce que** l'ébauche (24) est découpée dans la tôle plane par découpe au jet d'eau, poinçonnage, découpe au laser ou sciage.

6. Dispositif de serrage (1) selon l'une des revendications précédentes,
**caractérisé en ce qu'**au moins un bras de serrage (2), de préférence le bras de serrage (2) pourvu de la mâchoire de serrage (4), comprend une matière thermoplastique ou un métal ou un alliage de métaux, et/ou la mâchoire de serrage (4) comprend une matière plastique.

7. Dispositif de serrage selon l'une des revendications précédentes, **caractérisé en ce que** les deux bras de serrage (2) présentent respectivement une mâchoire de serrage (4) comportant un élément d'encliquetage (40) pour l'établissement d'une liaison par complémentarité de forme avec un évidement (21) réalisé dans le bras de serrage (2) associé.

8. Dispositif de traitement de récipient (8), comprenant une unité de traitement (82) pour le traitement d'un récipient (9) et un support de serrage (80),
**caractérisé en ce**
**qu'**au moins un dispositif de serrage (1) selon l'une des revendications précédentes est monté sur le support de serrage (80).

9. Dispositif de traitement de récipient (8) selon la revendication précédente, **caractérisé en ce que** l'unité de traitement (82) comprend une unité de rinçage pour le rinçage d'un récipient (9).
